# FASCICULE DE BREVET EUROPEEN

(11) **EP 1 135 778 B1**
(45) Date de publication et mention de la délivrance du brevet: **04.10.2006**
(21) Numéro de dépôt: 99973343.9
(22) Date de dépôt: 30.11.1999
(51) Int. Cl.: H01B 7/28

(54) **CABLE ELECTRIQUE A ECRAN METALLIQUE**
ELEKTRISCHES KABEL MIT EINER METALLABSCHIRMUNG
ELECTRIC CABLE WITH METAL SHIELDING

(30) Priorité: 04.12.1998 FR 9815346
(43) Date de publication de la demande: 26.09.2001
(73) Titulaire: Silec Cable, 77130 Montereau Fault Yonne (FR)
(72) Inventeur: MARTIN, Benoît, F-75012 Paris (FR)
(74) Mandataire: Fruchard, Guy
(86) Numéro de dépôt international: PCT/FR1999/002956
(87) Numéro de publication internationale: WO 2000/034960

(56) Documents cités:
- US-A- 3 662 090
- US-A- 4 035 211

## Description

La présente invention concerne un câble électrique à écran métallique utilisable notamment pour le transport ou la distribution d'électricité à très haute tension.

De tels câbles électriques comprennent généralement un conducteur isolé autour duquel s'étend un écran formé d'un ruban métallique, par exemple en aluminium ou en cuivre, ayant deux bords longitudinaux se chevauchant.

La fixation l'un à l'autre des bords longitudinaux du ruban métallique doit être étanche et présenter une bonne résistance mécanique.

Dans un premier type connu de câble, les bords longitudinaux du ruban métallique sont fixés l'un à l'autre par collage. Ce collage est simple à réaliser. La fixation obtenue est satisfaisante dans des conditions moyennes de température mais présente l'inconvénient d'avoir une mauvaise tenue mécanique à température relativement élevée.

Dans un deuxième type connu de câble, les bords longitudinaux du ruban métallique sont assujettis l'un à l'autre par soudage. La tenue mécanique de la fixation est alors satisfaisante quelles que soient les conditions de température. Cependant, la soudure, en particulier lorsqu'elle est réalisée par transparence au moyen d'un laser, est difficile à maîtriser notamment en cas de défauts géométriques ponctuels du ruban métallique de sorte qu'il existe un risque d'une discontinuité de la soudure permettant le passage de l'humidité vers l'intérieur du câble.

Selon l'invention, on prévoit, un câble comportant un conducteur isolé autour duquel s'étend un ruban métallique ayant deux bords longitudinaux dont l'un chevauche l'autre, ces bords longitudinaux étant assujettis l'un à l'autre par une soudure longitudinale de fixation, et le câble comprenant un élément longitudinal d'étanchéité s'étendant entre les deux bords longitudinaux en regard.

Ainsi, les fonctions de tenue mécanique et d'étanchéité de la fixation sont dissociées l'une de l'autre de sorte que l'étanchéité de la fixation est assurée même si la soudure longitudinale de fixation est interrompue localement.

Selon un premier mode de réalisation particulier, l'élément longitudinal d'étanchéité comprend un cordon de colle. L'élément d'étanchéité est alors de réalisation simple.

De préférence alors, le cordon de colle s'étend de manière adjacente à une arête d'extrémité du bord longitudinal chevauchant. Le cordon de colle isole alors la soudure longitudinale de fixation de l'air ambiant limitant ainsi le risque d'une corrosion de celle-ci. Le risque d'une pénétration de l'humidité entre l'élément longitudinal d'étanchéité et la soudure longitudinale de fixation est ainsi éliminé.

Selon un deuxième mode de réalisation particulier, l'élément longitudinal d'étanchéité comprend une soudure longitudinale additionnelle reliant les deux bords longitudinaux et s'étendant par rapport à la soudure longitudinale de fixation de manière qu'un espace s'étende entre elles, et une soudure de cloisonnement de cet espace ayant au moins une partie reliant la soudure longitudinale additionnelle à la soudure longitudinale de fixation. Ainsi, la soudure de cloisonnement constitue une barrière au cheminement de l'humidité dans l'espace séparant les soudures longitudinales. En cas de discontinuité de la soudure longitudinale additionnelle et de la soudure longitudinale de fixation, l'humidité ne peut donc pas progresser dans l'espace s'étendant entre celles-ci jusqu'à pénétrer à l'intérieur du câble.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue partielle en perspective, avec écorché, d'un câble électrique conforme à un premier mode de réalisation de l'invention,
- les figures 2 et 3 sont des vues analogues à celle de la figure 1 d'un câble électrique respectivement selon un deuxième et un troisième modes de réalisation.

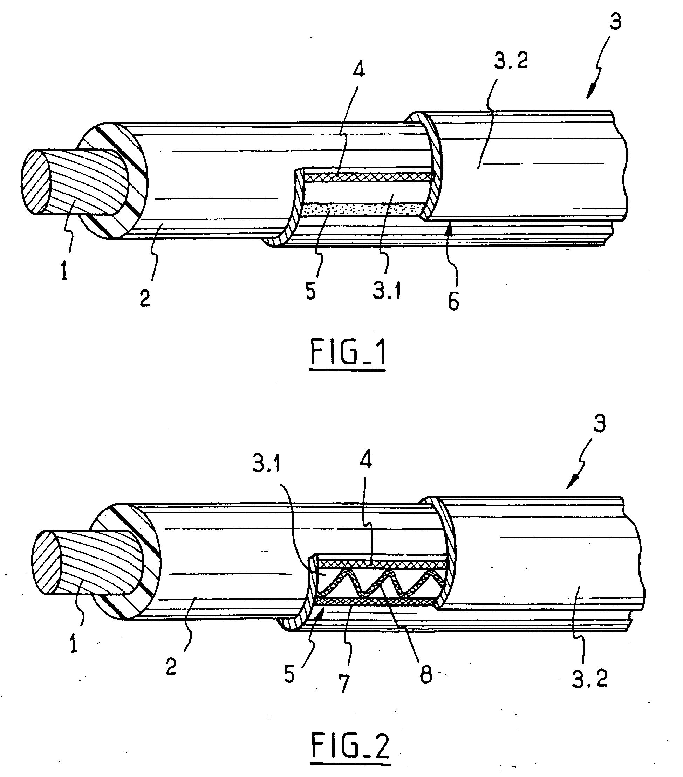

En référence aux figures 1 à 3, le câble électrique selon l'invention comprend de manière classique un conducteur isolé formé d'une âme conductrice 1 recouverte d'une gaine isolante 2 et un écran métallique généralement désigné en 3 s'étendant autour de la gaine isolante 2.

L'écran 3 est réalisé sous la forme d'un ruban en un métal tel que l'aluminium ou le cuivre ayant deux bords longitudinaux 3.1 et 3.2, le bord 3.2 chevauchant le bord 3.1.

Les bords longitudinaux 3.1, 3.2 sont assujettis l'un à l'autre par l'intermédiaire d'une soudure longitudinale de fixation 4. Cette soudure est réalisée par transparence au moyen d'un laser.

Conformément à l'invention, le câble comprend un élément longitudinal d'étanchéité 5 s'étendant entre-les deux bords longitudinaux 3.1 et 3.2 en regard.

En référence plus particulièrement à la figure 1, l'élément longitudinal d'étanchéité 5 est formé par un cordon de colle s'étendant parallèlement à la soudure longitudinale de fixation 4 et à proximité d'une arête longitudinale d'extrémité 6 du bord longitudinal 3.2 chevauchant.

La colle employée est par exemple une colle époxyde copolymère éthylène-acétate de vinyle (EVA) ou polyamide. Le cordon de colle 5 est déposé sur le ruban métallique 3 préalablement à la mise en forme de celui-ci. On notera qu'un simple contrôle optique du cordon de colle après dépôt permet de vérifier la continuité du cordon.

Le cordon de colle a une largeur inférieure à la largeur de recouvrement des bords longitudinaux 3.1, 3.2 de manière que la soudure longitudinale 4 soit suffisamment espacée du cordon de colle 5 pour que le chauffage engendré par la soudure ne risque pas de dégrader localement le cordon de colle. On remarquera que le cordon de colle maintient les deux bords longitudinaux en position l'un par l'autre pendant l'opération de soudure facilitant ainsi la réalisation de celle-ci.

On peut également prévoir de laisser la colle se refroidir avant de mettre le ruban métallique en forme, ce qui permet une manipulation plus aisée des bords lors du formage. Dans ce cas, la colle est réchauffée lors de l'extrusion de la gaine recouvrant l'écran métallique ce qui assure une adhérence sur le bord chevauchant. On pourra aussi réaliser la soudure avant le collage.

A la figure 2, l'élément longitudinal d'étanchéité 5 comporte une soudure longitudinale additionnelle 7 s'étendant parallèlement à la soudure longitudinale de fixation 4 de manière qu'un espace les sépare.

Une soudure 8 de cloisonnement de cet espace s'étend en zigzag entre la soudure longitudinale de fixation 4 et la soudure longitudinale additionnelle 7 de manière à relier ces deux soudures l'une à l'autre.

Les soudures 7 et 8 sont réalisées par transparence au moyen d'une ou plusieurs sources laser simultanément ou non à la réalisation de la soudure longitudinale de fixation 4.

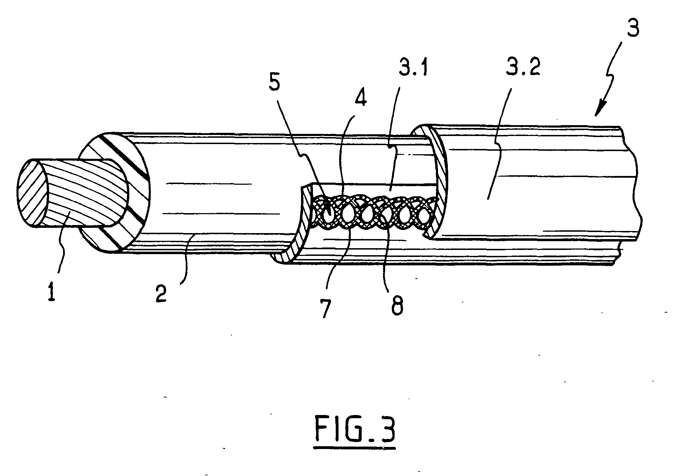

Dans le troisième mode de réalisation représenté à la figure 3, les bords longitudinaux 3.1 et 3.2 sont reliés l'un à l'autre par l'intermédiaire d'une soudure longitudinale présentant des spires jointives.

La soudure ainsi formée comprend deux bords longitudinaux en festons espacés formant la soudure longitudinale de fixation 4 et la soudure longitudinale additionnelle 7, et des portions transversales reliant la soudure longitudinale de fixation 4 et la soudure longitudinale additionnelle 7 l'une à l'autre et formant la soudure 8 de cloisonnement de l'espace s'étendant entre les soudures longitudinales 4 et 7.

La soudure est réalisée par transparence au moyen d'un laser associé à un miroir de focalisation mobile.

Bien entendu l'invention n'est pas limitée au mode de réalisation décrit et on peut y apporter des variantes de réalisation sans sortir du cadre de l'invention tel que défini par les revendications.

En particulier, bien que les soudures aient été décrites comme étant réalisées par laser, les soudures peuvent être réalisées également par arc électrique ou tout autre procédé de soudage. Dans le cas d'une étanchéité par un cordon de colle, la soudure de fixation peut même être réalisée par points.

En outre, un cordon de colle peut être réalisé de chaque côté de la soudure, ou une soudure peut être réalisée de chaque côté du cordon de colle. Une alternance de soudures et de cordons de colle peut également être envisagée.

## Revendications

1. Câble comportant un conducteur isolé (1, 2) autour duquel s'étend un ruban métallique (3) ayant deux bords longitudinaux (3.1, 3.2) dont l'un (3.2) chevauche l'autre (3.1), ces bords longitudinaux étant assujettis l'un à l'autre par une soudure longitudinale de fixation (4), **caractérisé en ce que** le câble comprend un élément longitudinal d'étanchéité (5) s'étendant entre les deux bords longitudinaux en regard.

2. Câble selon la revendication 1, **caractérisé en ce que** l'élément longitudinal d'étanchéité comprend un cordon de colle (5).

3. Câble selon la revendication 2, **caractérisé en ce que** le cordon de colle (5) s'étend de manière adjacente à une arête d'extrémité (6) du bord longitudinal chevauchant (3.2).

4. Câble selon la revendication 1, **caractérisé en ce que** l'élément longitudinal d'étanchéité (5) comprend une soudure longitudinale additionnelle (7) reliant les deux bords longitudinaux et s'étendant par rapport à la soudure longitudinale de fixation (4) de manière qu'un espace s'étende entre elles, et une soudure de cloisonnement de cet espace (8) ayant au moins une partie reliant la soudure longitudinale additionnelle à la soudure longitudinale de fixation.

5. Câble selon la revendication 4, **caractérisé en ce que** la soudure de cloisonnement (8) s'étend en zigzag entre la soudure longitudinale additionnelle (7) et la soudure longitudinale de fixation (4).

6. Câble selon la revendication 4, **caractérisé en ce que** la soudure de cloisonnement (8) forme des spires.

## Claims

1. A cable comprising an insulated conductor (1, 2) having a metal tape (3) extending thereabout, the tape having two longitudinal margins (3.1, 3.2), one of which (3.2) overlaps the other (3.1), these longitudinal margins being secured to each other by a longitudinal connection weld (4), the cable being **characterized in that** it includes a longitudinal sealing element (5) extending between the two facing longitudinal margins.

2. A cable according to claim 1, **characterized in that** the longitudinal sealing element comprises a bead of adhesive (5).

3. A cable according to claim 2, **characterized in that** the bead of adhesive (5) extends adjacent to an end edge (6) of the overlapping longitudinal margin (3.2).

4. A cable according to claim 1, **characterized in that** the longitudinal sealing element (5) comprises an additional longitudinal weld (7) interconnecting the two longitudinal margins and extending relative to the connection longitudinal weld (4) in such a manner as to leave a space extending between them, and a partitioning weld (8) partitioning this space having at least one portion connecting the additional longitudinal weld to the connection longitudinal weld.

5. A cable according to claim 4, **characterized in that** the partitioning weld (8) extends in a zigzag configuration between the additional longitudinal weld (7) and the connection longitudinal weld (4).

6. A cable according to claim 4, **characterized in that** the partitioning weld (8) is made up of turns.

## Patentansprüche

1. Kabel, umfassend einen isolierten Leiter (1, 2), um den sich ein metallenes Band (3) erstreckt, das zwei Längsränder (3.1, 3.2) hat, von denen der eine (3.2) den anderen (3.1) überdeckt, wobei diese Längsränder mittels einer Befestigungslängsschweißnaht (4) aneinander befestigt sind, **dadurch gekennzeichnet, dass** das Kabel ein Längsdichtungselement (5) umfasst, das sich zwischen den beiden gegenüberliegenden Längsrändern erstreckt.

2. Kabel nach Anspruch 1, **dadurch gekennzeichnet, dass** das Längsdichtungselement ein Klebeband (5) umfasst.

3. Kabel nach Anspruch 2, **dadurch gekennzeichnet, dass** sich das Klebeband (5) angrenzend an eine Endkante (6) des überdeckenden Längsrandes (3.2) erstreckt.

4. Kabel nach Anspruch 1, **dadurch gekennzeichnet, dass** das Längsdichtungselement (5) eine zusätzliche Längsschweißnaht (7) umfasst, die die beiden Längsränder miteinander verbindet und die relativ zur Befestigungslängsschweißnaht (4) derart verläuft, dass sich zwischen denselben ein Zwischenraum erstreckt, wobei eine Zwischenschweißnaht (8) zum Unterteilen dieses Zwischenraumes (8) mindestens einen Abschnitt hat, der die zusätzliche Längsschweißnaht mit der Befestigungslängsschweißnaht verbindet.

5. Kabel nach Anspruch 4, **dadurch gekennzeichnet, dass** sich die Zwischenschweißnaht (8) zickzackförmig zwischen der zusätzlichen Längsschweißnaht (7) und der Befestigungslängsschweißnaht (4) erstreckt.

6. Kabel nach Anspruch 4, **dadurch gekennzeichnet, dass** die Zwischenschweißnaht (8) Windungen ausbildet.
